# EUROPÄISCHE PATENTSCHRIFT

(11) **EP 3 471 173 B1**
(45) Veröffentlichungstag und Bekanntmachung des Hinweises auf die Patenterteilung: **25.08.2021**
(21) Anmeldenummer: 18198598.7
(22) Anmeldetag: 04.10.2018
(51) Int. Cl.: H01M 4/04, H01M 4/38

(54) **VERFAHREN ZUR HERSTELLUNG EINES ELEKTRODENFILMS**
METHOD FOR PRODUCING AN ELECTRODE FILM
PROCÉDÉ DE FABRICATION D'UN FILM D'ÉLECTRODE

(30) Priorität: 16.10.2017 DE 102017218419
(43) Veröffentlichungstag der Anmeldung: 17.04.2019
(73) Patentinhaber: Robert Bosch GmbH, 70442 Stuttgart (DE)
(72) Erfinder: Hackenberg, Juergen, 74343 Sachsenheim (DE); Lindner, Peter, 74372 Sersheim (DE); Bauer, Harald, 71139 Ehningen (DE)

(56) Entgegenhaltungen:
- DE-T2- 3 886 533
- JP-A- H07 136 978
- US-A1- 2002 086 213

## Beschreibung

Die Erfindung betrifft ein Verfahren zur Herstellung eines Elektrodenfilms durch Aufbringung einer Lithiumschicht auf eine bandförmige Metallfolie. Dabei wird auf mindestens eine Oberfläche der Metallfolie flüssiges Lithium durch Aufschmelzen aufgebracht. Offenbart ist auch eine Elektrode für eine Batteriezelle, welche mindestens einen Teil eines nach dem erfindungsgemäßen Verfahren hergestellten Elektrodenfilms umfasst.

### Stand der Technik

Es ist bekannt, dass eine metallisch blanke Lithium-Metall-Oberfläche an nahezu jeder Oberfläche wenigstens in Spuren stark anhaftet. Das Anhaften kann reduziert werden, wenn Lithium in einer Flüssigkeit gehandhabt und auch in der Flüssigkeit liegend geschnitten wird. Nach Stand der Technik wird daher beispielsweise auf metallisch blanken Lithiumbändern ein Trennmittel wie Silikonöl bei der Verarbeitung eingesetzt.

Das Herstellen dünner Lithium-Folien mit Dicken unter 60 µm ist eine Herausforderung, die nach Stand der Technik dadurch gelöst wird, dass Lithium Folien mit Trennmittel versehen dünn gewalzt werden. Diese dünnen Lithiumfolien werden anschließend mit einer Metallfolie, beispielsweise aus Kupfer versehen, welche als Stromableiter einer Elektrode fungiert und mit einem elektrischen Pol einer fertigen Batterie verbunden wird. Weitere Möglichkeiten sind das Herstellen dünner Lithium-Schichten mittels Aufdampfen oder mittels galvanischer Abscheidung auf Metallfolien. Mit diesen Beschichtungsverfahren können Lithiumschichten im einstelligen Mikrometerbereich auf Metallfolien, die dann als Stromableiter einer Elektrode verwendet werden können, hergestellt werden. Solche Lithiumschichten stellen bereits bei diesen geringen Schichtdicken eine ausreichende Menge an Lithiumatomen für das Laden und Entladen einer Batterie bereit.

Mit Auswalzverfahren können derzeit keine dünnen Lithiumfolien mit Dicken von weniger als 10 µm hergestellt werden. Auch das Weglassen des Trennmittels ist nach Stand der Technik nicht möglich, obwohl das Trennmittel in der fertigen Batterie Einfluss auf die elektrochemische Performance und das Dendritenwachstum beim Zyklisieren nimmt. Beschichtungsverfahren sind technologisch machbar, erfordern jedoch einen großen apparativen Aufwand und bilden durch das Schichtwachstum keine identische Oberflächenstruktur aus wie sie beim Auswalzen oder beim Gießen einer Folie erhalten werden kann. Beim Aufdampfen im Vakuum gelangen kleinste Lithiummengen auf die gekühlte Trägerfolie und kondensieren dort sofort. Allerdings sind die Aufdampfraten gering und mit dem damit verbundenen geringen Durchsatz die Kosten als Herstellverfahren hoch, insbesondere wenn nicht nur wenige Nanometer sondern einige Mikrometer abgeschieden werden sollen.

Aus "Advanced Model for Solid Electrolyte Interphase Electrodes in Liquid and Polymer Electrolytes, E. Peled,* 0. Golodnitsky,* and G. Ardel, School of Chemistry, Tel Aviv University, Tel Aviv, Israel 69978,J. Electrochem. Soc., Vol. 144, No. 8, August 1997 @ The Electrochemical Society, Inc." ist bekannt, dass sich beim Laden einer Batterie als Reaktionsprodukte aus Lithium und den Bestandteilen des Elektrolyten eine "Solid Electrolyte Interphase" (SEI) bildet, welche aus einer Mischung unterschiedlichster Verbindungen besteht.

Auch aus "The Electrochemical Behavior of Alkali and Alkaline Earth Metals in Nonaqueous Battery Systems--The Solid Electrolyte Interphase Model, E. Paled*, JOURNAL OF THE ELECTRORHEMICAL SOCIETY, ELECTROCHEMICAL SCIENCE AND TECHNOLOGY, DECEMBER 1979" ist bekannt, dass in nichtwässrigen Batterien Alkalimetalle von einer Schicht bedeckt werden, die durch eine Reaktion des Metalls mit dem Elektrolyten entsteht.

Das Dokument JP H09-330708 offenbart ein Verfahren zur Bearbeitung von Lithiumfolien. Dabei ist ein Schneidmesser zum Schneiden von Lithiumfolien vorgesehen, an dessen Seite ein Vliesstoff beweglich angeordnet ist. Der Vliesstoff ist dabei mit einem gesättigten Kohlenwasserstoff imprägniert. Beim Schneiden einer Lithiumfolie wird der Vliesstoff mit dem Kohlenwasserstoff zu der Schneidkante des Schneidmessers bewegt, wodurch ein Anhaften des Lithiums an dem Schneidmesser verhindert wird.

Aus dem Dokument DE 3886533T2 ist ein Verfahren zur Herstellung einer Elektrode bekannt.

### Offenbarung der Erfindung

Es wird ein Verfahren zur Herstellung eines Elektrodenfilms durch Aufbringung einer Lithiumschicht auf eine bandförmige Metallfolie vorgeschlagen. Der Elektrodenfilm ist beispielsweise für eine negative Elektrode, also eine Anode, in einer Elektrodeneinheit einer Batteriezelle vorgesehen. In diesem Fall ist die Metallfolie, auf welche die Lithiumschicht aufgebracht wird, beispielsweise aus Kupfer gefertigt.

Verfahrensgemäß wird zunächst auf mindestens eine Oberfläche der Metallfolie flüssiges Lithium durch Aufschmelzen aufgebracht. Das Lithium liegt dabei in geschmolzener oder schmelzflüssiger Form vor und weist eine Temperatur oberhalb der Schmelztemperatur von etwa 180,5 °C auf. Das flüssige Lithium bildet unmittelbar nach dem Aufbringen eine verhältnismäßig dicke Schicht auf der Oberfläche der Metallfolie.

Anschließend wird überschüssiges Lithium durch Abziehen mit einem Abziehwerkzeug von der Metallfolie entfernt. Insbesondere wird dabei so viel Lithium entfernt, dass das auf der Metallfolie verbleibende Lithium noch eine gewünschte Dicke von beispielsweise 10 µm auf der Oberfläche der Metallfolie aufweist.

Dabei ist eine Außenfläche des Abziehwerkzeugs, welche beim Abziehen des Lithiums von der Metallfolie in direkten Kontakt mit dem Lithium gelangt, aus Lithiumfluorid (LiF) gebildet. Das Abziehwerkzeug kann auch vollständig aus Lithiumfluorid gebildet sein.

Lithiumfluorid ist das Lithiumsalz der Fluorwasserstoffsäure und weist eine verhältnismäßig hohe Schmelztemperatur von etwa 845 °C auf. Somit verbleibt die Außenfläche des Abziehwerkzeugs in festem Zustand, wenn das Abziehwerkzeug in Kontakt mit dem flüssigen Lithium kommt, welches eine deutlich geringere Temperatur aufweist.

Es hat sich gezeigt, dass geschmolzenes, flüssiges Lithium nicht an Lithiumfluorid anhaftet. Somit kann das überschüssige Lithium durch Abziehen mit dem Abziehwerkzeug bis auf die gewünschte Dicke von der Oberfläche der Metallfolie entfernt werden, ohne dass das Lithium dabei an dem Abziehwerkzeug anhaftet.

Nach dem Entfernen des überschüssigen Lithiums von der Metallfolie weist das verbleibende Lithium, wie bereits erwähnt, noch eine gewünschte Dicke von beispielsweise 10 µm auf der Oberfläche der Metallfolie auf. Das verbleibende Lithium kühlt dann unter die Schmelztemperatur ab und erstarrt. Das erstarrte, in fester Form vorliegende Lithium bildet dann die Lithiumschicht auf der bandförmigen Metallfolie.

Gemäß einer vorteilhaften Ausgestaltung der Erfindung ist das Abziehwerkzeug, mit welchem das überschüssige Lithium von der Metallfolie entfernt wird, als Rakel ausgebildet. Gemäß einer anderen vorteilhaften Ausgestaltung der Erfindung ist das Abziehwerkzeug, mit welchem das überschüssige Lithium von der Metallfolie entfernt wird, als Walze ausgebildet.

Vorzugsweise wird das Abziehwerkzeug, mit welchem das überschüssige Lithium von der Metallfolie entfernt wird, während des Abziehens des überschüssigen Lithiums von der Metallfolie gekühlt.

Bevorzugt wird das flüssige Lithium dabei in einer Schutzatmosphäre auf die mindestens eine Oberfläche der Metallfolie aufgebracht. Die besagte Schutzatmosphäre weist dabei ein Schutzgas auf, welches weder das auf die mindestens eine Oberfläche der Metallfolie aufgebrachte flüssige Lithium noch das erstarrte Lithium in der Lithiumschicht auf der bandförmigen Metallfolie angreift.

Bei dem besagten Schutzgas handelt es sich beispielsweise um trockene Luft, welche eine Tautemperatur von weniger als -50 °C aufweist. Bei dem besagten Schutzgas kann es sich aber auch um Kohlenstoffdioxid, Argon oder auch um Mischungen der besagten Gase handeln.

Gemäß einer bevorzugten Weiterbildung der Erfindung wird auf der Lithiumschicht des Elektrodenfilms eine Schutzschicht erzeugt. Die besagte Schutzschicht wird insbesondere auf einer Seite der Lithiumschicht erzeugt, welche der Metallfolie abgewandt ist. Die Schutzschicht verhindert ein Anhaften der Lithiumfolie an anderen Materialien.

Bei der besagten Schutzschicht handelt es sich bevorzugt um eine Schicht, welche als "Solid Electrolyte Interphase" (SEI) bezeichnet wird. Eine derartige Schutzschicht entsteht insbesondere, wenn sich ein flüssiger Elektrolyt auf der Lithiumschicht ablagert und dabei zersetzt wird.

Vorzugsweise wird die Schutzschicht, die auf der Lithiumschicht erzeugt wird, durch Führen des Elektrodenfilms, welcher die bandförmige Metallfolie und die Lithiumschicht umfasst, durch ein Tauchbad erzeugt. Auch andere Verfahren zum Erzeugen der Schutzschicht auf der Lithiumschicht sind denkbar. Beispielsweise kann die Schutzschicht auch durch ein Sprühverfahren, insbesondere durch Aufsprühen eines flüssigen Elektrolyten auf die Lithiumschicht, erzeugt werden.

Vorzugsweise ist in dem Tauchbad ein flüssiger Elektrolyt vorgesehen. Der flüssige Elektrolyt lagert sich in dem Tauchbad auf der Lithiumschicht ab, wodurch die besagte Schutzschicht entsteht.

Gemäß einer bevorzugten Ausgestaltung der Erfindung enthält der flüssige Elektrolyt Ethylencarbonat und Propylencarbonat. Der Elektrolyt kann auch noch weitere Bestandteile enthalten.

Gemäß einer bevorzugten Ausgestaltung der Erfindung enthält der flüssige Elektrolyt Lithiumfluorid, insbesondere in gelöster Form und vorzugsweise in einer Konzentration von etwa 1 g/L bis 2 g/L.

Es wird auch eine Elektrode für eine Batteriezelle vorgeschlagen, welche mindestens einen Teil eines nach dem erfindungsgemäßen Verfahren hergestellten Elektrodenfilms umfasst. Ein solches Teil des Elektrodenfilms ist beispielsweise ein plattenförmiges Elektrodensegment.

### Vorteile der Erfindung

Mittels des erfindungsgemäßen Verfahrens kann, zur Herstellung eines Elektrodenfilms, eine Lithiumschicht mit einer gewünschten Dicke auf eine bandförmige Metallfolie durch Aufschmelzen aufgebracht werden. Durch die Benutzung eines Abziehwerkzeugs, dessen Außenfläche aus Lithiumfluorid gebildet ist, oder das vollständig aus Lithiumfluorid gebildet ist, ist ein Anhaften des Lithiums an dem Abziehwerkzeug vorteilhaft verhindert. Die gewünschte Dicke der Lithiumschicht auf der Metallfolie kann somit durch Abziehen des überschüssigen Lithiums von der Metallfolie eingestellt werden. Somit ist die Herstellung eines Elektrodenfilms und damit einer Elektrode, insbesondere einer Anode für eine Batteriezelle, vorteilhaft vereinfacht.

Überraschend hat sich gezeigt, dass eine Lithiumfolie oder eine Lithiumschicht, welche eine Schutzschicht aus "Solid Electrolyte Interphase" (SEI) aufweist, an einer anderen Lithiumfolie, die ebenfalls eine solche Schutzschicht aufweist, nicht anhaftet. Ebenso überraschend hat sich gezeigt, dass Folien, die bereits eine Oberfläche besitzen, die kein Reaktionspotenzial gegenüber Lithium und/oder der SEI besitzen, mit der Lithiummetallfolie keine Anhaftung zeigen. Die weitere Verarbeitung, insbesondere das Schneiden des Elektrodenfilms ist somit deutlich vereinfacht, wenn auf der Lithiumschicht eine entsprechende Schutzschicht ausgebildet ist.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung des Verfahrens zur Herstellung eines Elektrodenfilms,
- Figur 2: eine schematische Darstellung der Entfernung von überschüssigem Lithium gemäß einer ersten Ausführungsform,
- Figur 3: eine schematische Darstellung der Entfernung von überschüssigem Lithium gemäß einer zweiten Ausführungsform und
- Figur 4: eine schematische Darstellung der Aufbringung einer Schutzschicht in einem Tauchbad.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

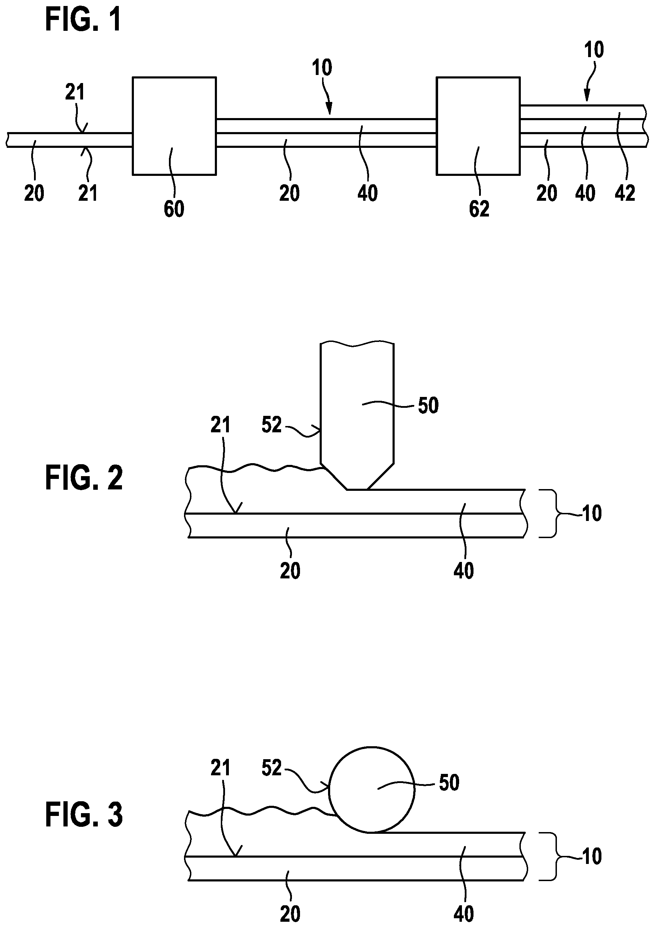

Figur 1 zeigt eine schematische Darstellung des Verfahrens zur Herstellung eines Elektrodenfilms 10. Der Elektrodenfilm 10 ist vorliegend für eine negative Elektrode, also eine Anode, in einer Elektrodeneinheit einer Batteriezelle vorgesehen.

Eine Metallfolie 20 wird einer Aufschmelzanlage 60 zugeführt. Die Metallfolie 20 ist bandförmig ausgebildet und vorliegend aus Kupfer gefertigt. Die bandförmige Metallfolie 20 weist zwei gegenüberliegende Oberflächen 21 auf. Die bandförmige Metallfolie 20 wird beispielsweise von einer hier nicht dargestellten Rolle abgewickelt und der Aufschmelzanlage 60 zugeführt.

In der Aufschmelzanlage 60 wird auf eine der Oberflächen 21 der Metallfolie 20 flüssiges Lithium durch Aufschmelzen aufgebracht. Das Lithium liegt dabei in geschmolzener oder schmelzflüssiger Form vor und weist eine Temperatur oberhalb der Schmelztemperatur von etwa 180,5 °C auf.

In der Aufschmelzanlage 60, wo das flüssige Lithium auf die Oberfläche 21 der Metallfolie 20 aufgebracht wird, herrscht eine Schutzatmosphäre. Die besagte Schutzatmosphäre weist dabei ein Schutzgas auf. Bei dem besagten Schutzgas handelt es sich beispielsweise um trockene Luft, di eine Tautemperatur von weniger als -50°C aufweist, um Kohlenstoffdioxid, um Argon oder auch um Mischungen der besagten Gase.

Das flüssige Lithium bildet unmittelbar nach dem Aufbringen auf die Oberfläche 21 der Metallfolie 20 dort eine verhältnismäßig dicke Schicht. Anschließend wird in der Aufschmelzanlage 60 überschüssiges Lithium von der Metallfolie 20 entfernt. Die Entfernung von überschüssigem Lithium von der Metallfolie 20 in der Aufschmelzanlage 60 mit verschiedenen Abziehwerkzeugen 50 ist in Figur 2 und in Figur 3 dargestellt.

Nach dem Entfernen des überschüssigen Lithiums von der Metallfolie 20 weist das auf der Oberfläche 21 der Metallfolie 20 verbleibende Lithium noch eine gewünschte Dicke von beispielsweise 10 µm auf. Das verbleibende Lithium kühlt dann unter die Schmelztemperatur ab und erstarrt. Das erstarrte, in fester Form vorliegende Lithium bildet dann eine Lithiumschicht 40 auf der bandförmigen Metallfolie 20.

Die Metallfolie 20 bildet mit der Lithiumschicht 40 den Elektrodenfilm 10. Dieser Elektrodenfilm 10 wird weiter verarbeitet und dabei einem Tauchbad 62 zugeführt, in welchem auf der Lithiumschicht 40 eine Schutzschicht 42 erzeugt wird. Die besagte Schutzschicht 42 wird dabei auf einer Seite der Lithiumschicht 40 erzeugt, welche der Metallfolie 20 abgewandt ist.

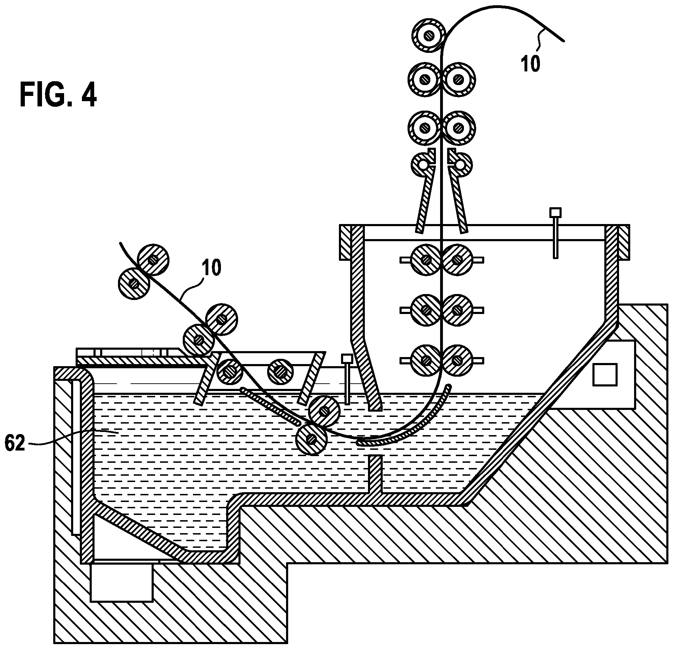

Nach Austritt aus dem Tauchbad 62 weist Elektrodenfilm 10 dann die Metallfolie 20, die Lithiumschicht 40 und die Schutzschicht 42 auf. Bei der besagten Schutzschicht 42 handelt es sich vorliegend um eine Schicht, welche als "Solid Electrolyte Interphase" (SEI) bezeichnet wird. Die Erzeugung der Schutzschicht 42 in dem Tauchbad 62 ist in Figur 4 dargestellt.

Figur 2 zeigt eine schematische Darstellung der Entfernung von überschüssigem Lithium von der Metallfolie 20 in der Aufschmelzanlage 60 gemäß einer ersten Ausführungsform. Wie bereits erwähnt, bildet das flüssige Lithium unmittelbar nach dem Aufbringen eine verhältnismäßig dicke Schicht auf der Oberfläche 21 der Metallfolie 20. Die besagte Schicht des flüssigen Lithiums auf der Oberfläche 21 der Metallfolie 20 ist auch nicht glatt sondern uneben.

Das überschüssige Lithium wird durch Abziehen mit einem Abziehwerkzeug 50 von der Metallfolie 20 entfernt. Das Abziehwerkzeug 50 ist vorliegend als Rakel ausgebildet. Das Abziehwerkzeug 50 ist vorliegend vollständig aus Lithiumfluorid gebildet. Alternativ kann auch nur eine Außenfläche 52 des Abziehwerkzeugs 50, welche beim Abziehen des Lithiums von der Metallfolie 20 in direkten Kontakt mit dem Lithium gelangt, aus Lithiumfluorid gebildet sein. Während des Abziehens des überschüssigen Lithiums von der Metallfolie 20 wird das Abziehwerkzeug 50 gekühlt.

Mittels des Abziehwerkzeugs 50 wird dabei so viel Lithium entfernt, dass das auf der Oberfläche 21 der Metallfolie 20 verbleibende Lithium noch die gewünschte Dicke von vorliegend 10 µm aufweist. Durch das Abziehen wird die Schicht aus Lithium auch geglättet. Nach Abkühlen und Erstarren bildet das Lithium dann die Lithiumschicht 40 auf der Metallfolie 20.

Figur 3 zeigt eine schematische Darstellung der Entfernung von überschüssigem Lithium von der Metallfolie 20 in der Aufschmelzanlage 60 gemäß einer zweiten Ausführungsform. Wie bereits erwähnt, bildet das flüssige Lithium unmittelbar nach dem Aufbringen eine verhältnismäßig dicke Schicht auf der Oberfläche 21 der Metallfolie 20. Die besagte Schicht des flüssigen Lithiums auf der Oberfläche 21 der Metallfolie 20 ist auch nicht glatt sondern uneben.

Das überschüssige Lithium wird durch Abziehen mit einem Abziehwerkzeug 50 von der Metallfolie 20 entfernt. Das Abziehwerkzeug 50 ist vorliegend als Walze ausgebildet. Das Abziehwerkzeug 50 ist vorliegend vollständig aus Lithiumfluorid gebildet. Alternativ kann auch nur eine Außenfläche 52 des Abziehwerkzeugs 50, welche beim Abziehen des Lithiums von der Metallfolie 20 in direkten Kontakt mit dem Lithium gelangt, aus Lithiumfluorid gebildet sein. Während des Abziehens des überschüssigen Lithiums von der Metallfolie 20 wird das Abziehwerkzeug 50 gekühlt.

Mittels des Abziehwerkzeugs 50 wird dabei so viel Lithium entfernt, dass das auf der Oberfläche 21 der Metallfolie 20 verbleibende Lithium noch die gewünschte Dicke von vorliegend 10 µm aufweist. Durch das Abziehen wird die Schicht aus Lithium auch geglättet. Nach Abkühlen und Erstarren bildet das Lithium dann die Lithiumschicht 40 auf der Metallfolie 20.

Figur 4 zeigt eine schematische Darstellung von der Erzeugung einer Schutzschicht 42 auf der Lithiumschicht 40 des Elektrodenfilms 10 in einem Tauchbad 62. Der Elektrodenfilm 10, welcher die Metallfolie 20 und die Lithiumschicht 40 umfasst, wird zunächst mittels umlaufender Rollen zu dem Tauchbad 62 transportiert.

In dem Tauchbad 62 ist ein flüssiger Elektrolyt vorgesehen. Der flüssige Elektrolyt enthält vorliegend Ethylencarbonat und Propylencarbonat sowie Lithiumfluorid in gelöster Form mit einer Konzentration von etwa 1 g/L bis 2 g/L. Der Elektrolyt kann auch noch weitere Bestandteile enthalten.

Der flüssige Elektrolyt lagert sich in dem Tauchbad 62 auf der Lithiumschicht 40 ab, insbesondere auf der der Metallfolie 20 abgewandten Seite der Lithiumschicht 40. Dabei findet eine chemische Reaktion statt und der flüssige Elektrolyt wird zersetzt. Dadurch entsteht die besagte Schutzschicht 42, welche als "Solid Electrolyte Interphase" (SEI) bezeichnet wird, auf der Lithiumschicht 40 des Elektrodenfilms 10.

Der Elektrodenfilm 10, welcher nunmehr die Metallfolie 20, die Lithiumschicht 40 und die Schutzschicht 42 auf weist, wird mittels umlaufender Rollen aus dem Tauchbad 62 transportiert. Der Elektrodenfilm 10, der vorliegend für eine Anode vorgesehen ist, wird anschließend beispielsweise mit einer Kathode unter Zwischenlage eines Separators zu einem Elektrodenwickel gewunden. Ebenfalls kann der Elektrodenfilm 10 zu plattenförmigen Segmenten geschnitten werden, welche mit Segmenten einer Kathode unter Zwischenlage von Separatorsegmenten zu einem Elektrodenstapel gestapelt werden. Der Elektrodenwickel sowie der Elektrodenstapel bilden eine Elektrodeneinheit in einer Batteriezelle.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Elektrodenfilms (10) durch Aufbringung einer Lithiumschicht (40) auf eine bandförmige Metallfolie (20), wobei auf mindestens eine Oberfläche (21) der Metallfolie (20) flüssiges Lithium durch Aufschmelzen aufgebracht wird, und überschüssiges Lithium durch Abziehen mit einem Abziehwerkzeug (50) von der Metallfolie (20) entfernt wird, wobei
eine Außenfläche (52) des Abziehwerkzeugs (50) aus Lithiumfluorid gebildet ist.

2. Verfahren nach Anspruch 1, wobei
das Abziehwerkzeug (50) als Rakel oder als Walze ausgebildet ist.

3. Verfahren nach einem der vorstehenden Ansprüche, wobei das Abziehwerkzeug (50) während des Abziehens gekühlt wird.

4. Verfahren nach einem der vorstehenden Ansprüche, wobei
das flüssige Lithium in einer Schutzatmosphäre
auf die mindestens eine Oberfläche (21) der Metallfolie (20) aufgebracht wird.

5. Verfahren nach einem der vorstehenden Ansprüche, wobei
auf der Lithiumschicht (40) eine Schutzschicht (42) erzeugt wird.

6. Verfahren nach Anspruch 5, wobei
die Schutzschicht (42) durch Führen des Elektrodenfilms (10) durch ein Tauchbad (62) erzeugt wird.

7. Verfahren nach Anspruch 6, wobei
in dem Tauchbad (62) ein flüssiger Elektrolyt vorgesehen ist.

8. Verfahren nach Anspruch 7, wobei
der flüssige Elektrolyt Ethylencarbonat und Propylencarbonat enthält.

9. Verfahren nach einem der Ansprüche 7 bis 8, wobei
der flüssige Elektrolyt Lithiumfluorid enthält.

## Claims

1. Method for producing an electrode film (10) by applying a lithium layer (40) to a strip-like metal foil (20), where
liquid lithium is applied by melting to at least one surface (21) of the metal foil (20), and excess lithium is removed from the metal foil (20) by take-off with a take-off tool (50), where an outer face (52) of the take-off tool (50) is formed of lithium fluoride.

2. Method according to Claim 1, where the take-off tool (50) is configured as a doctor or as a roll.

3. Method according to either of the preceding claims, where
the take-off tool (50) is cooled during take-off.

4. Method according to any of the preceding claims, where
the liquid lithium is applied in a protective atmosphere to the at least one surface (21) of the metal foil (20).

5. Method according to any of the preceding claims, where
a protective layer (42) is produced on the lithium layer (40).

6. Method according to Claim 5, where the protective layer (42) is produced by guiding of the electrode film (10) through a dip bath (62).

7. Method according to Claim 6, where a liquid electrolyte is provided in the dip bath (62) .

8. Method according to Claim 7, where the liquid electrolyte comprises ethylene carbonate and propylene carbonate.

9. Method according to either of Claims 7 and 8, where the liquid electrolyte comprises lithium fluoride.

## Revendications

1. Procédé de production d'un film d'électrode (10) par application d'une couche de lithium (40) sur une feuille métallique (20) en forme de bande, du lithium liquide étant appliqué par fusion sur au moins une surface (21) de la feuille métallique (20), et l'excès de lithium étant retiré de la feuille métallique (20) par repassage à l'aide d'un outil de repassage (50), une surface extérieure (52) de l'outil de repassage (50) étant formée de fluorure de lithium.

2. Procédé selon la revendication 1,
l'outil de repassage (50) étant conçu sous la forme d'une racle ou d'un rouleau.

3. Procédé selon l'une des revendications précédentes,
l'outil de repassage (50) étant refroidi pendant le processus de repassage.

4. Procédé selon l'une des revendications précédentes,
le lithium liquide étant appliqué dans une atmosphère protectrice sur l'au moins une surface (21) de la feuille métallique (20).

5. Procédé selon l'une des revendications précédentes,
une couche de protection (42) étant générée sur la couche de lithium (40).

6. Procédé selon la revendication 5,
la couche de protection (42) étant générée par guidage du film d'électrode (10) à travers un bain d'immersion (62) .

7. Procédé selon la revendication 6,
un électrolyte liquide étant prévu dans le bain d'immersion (62).

8. Procédé selon la revendication 7,
l'électrolyte liquide contenant du carbonate d'éthylène et du carbonate de propylène.

9. Procédé selon l'une des revendications 7 à 8,
l'électrolyte liquide contenant du fluorure de lithium.
